# EUROPÄISCHE PATENTSCHRIFT

(11) **EP 1 543 930 B1**
(45) Veröffentlichungstag und Bekanntmachung des Hinweises auf die Patenterteilung: **01.09.2010**
(21) Anmeldenummer: 04029982.8
(22) Anmeldetag: 17.12.2004
(51) Int. Cl.: B29B 7/48, B29B 7/58, B29B 7/72, B29C 47/40, B30B 11/24, B01F 7/08, B29C 47/08

(54) **Vorrichtung zum Verarbeiten von Gummi**
Apparatus for working rubbers
Dispositif pour le traitment de caoutchouc

(30) Priorität: 19.12.2003 DE 10359774
(43) Veröffentlichungstag der Anmeldung: 22.06.2005
(73) Patentinhaber: Thyssenkrupp Elastomertechnik GmbH, 57258 Freudenberg (DE)
(72) Erfinder: Limper, Andreas, Prof. Dr.-Ing., 57258 Freudenberg (DE); Keuter, Harald, Dr.-Ing., 57258 Freudenberg (DE); Müller, Michael, 57299 Burbach (DE); Monyer, Hans Martin, 51645 Gummersbach (DE); Durst, Jens Henrik, 57572 Niederfischbach (DE); Buchen, Eugen, 57572 Niederfischbach (DE)
(74) Vertreter: Grosse, Wolf-Dietrich Rüdiger

(56) Entgegenhaltungen:
- EP-A- 0 472 431
- EP-A- 0 775 569
- EP-A- 0 816 033
- EP-A- 0 865 896
- DE-A1- 1 778 369
- DE-A1- 4 032 087
- DE-B- 1 030 555
- DE-C- 878 844
- US-A- 3 104 420
- US-A- 3 605 188
- PATENT ABSTRACTS OF JAPAN Bd. 013, Nr. 258 (M-838), 15. Juni 1989 (1989-06-15) & JP 01 063689 A (HITACHI LTD), 9. März 1989 (1989-03-09)
- PATENT ABSTRACTS OF JAPAN Bd. 010, Nr. 365 (M-542), 6. Dezember 1986 (1986-12-06) & JP 61 160219 A (NIPPEI TOYAMA CORP), 19. Juli 1986 (1986-07-19)
- PATENT ABSTRACTS OF JAPAN Bd. 011, Nr. 281 (M-624), 11. September 1987 (1987-09-11) & JP 62 080007 A (UBE IND LTD; others: 02), 13. April 1987 (1987-04-13)
- PATENT ABSTRACTS OF JAPAN Bd. 009, Nr. 319 (M-439), 14. Dezember 1985 (1985-12-14) & JP 60 154030 A (MASAO MORIYAMA), 13. August 1985 (1985-08-13)
- PATENT ABSTRACTS OF JAPAN Bd. 004, Nr. 094 (M-019), 8. Juli 1980 (1980-07-08) & JP 55 051543 A (TOSHIBA MACH CO LTD), 15. April 1980 (1980-04-15)

## Beschreibung

Die Erfindung betrifft eine Vorrichtung zur Verarbeitung von Gummi- oder Gummirohstoff-, Kautschuk-, gummiartigen oder ähnlichen elastischen Natur- oder Kunstmassen nach dem Oberbegriff des Anspruchs 1, vgl. z.B die JP-A-0 163 689.

Es ist bekannt, in der gummiherstellenden und -verarbeitenden Industrie Ballen, Blöcke oder ähnliche Körper aus natürlichem oder künstlichem Kautschuk oder ähnlichen Gummi- oder Gummirohmaterialien zunächst mit einem Kautschukspalter in kleinere Stücke zu teilen, um diese dann in einem Mischer mit weiteren Zuschlägen, beispielsweise Ruß, bei erhöhter Temperatur zu vermengen. Am Ende des Mischprozesses wird aus dem Mischer ein unförmiger Klumpen Mischguts ausgeworfen, welcher für die Weiterverarbeitung in eine breite Bahn, dem sogenannten Fell, umgeformt werden muß. Dazu wird der Klumpen durch ein Walzwerk geleitet, wobei sich die Masse um zumindest eine Walze wickelt und von dieser durch eine oder mehrere Bedienpersonen abgeschält werden muß. Eine Selbstreinigung der Walze findet dabei nicht statt. Das abgeschälte Rohmaterial wird einer Weiterverarbeitung zugeführt. Diese kann ein weiteres (gekühltes) Walzwerk umfassen, an dessen Ende großflächige Kautschukfelle erhalten werden.

Um hingegen eine Extrusion des Materials zu ermöglichen, ist es bekannt, das Material statt dessen einem zur Vermeidung des Anklebens der Masse gekühlten Doppelschneckenextruder (DSE) zuzuführen. Bei der sehr zähen, hochviskosen Kautschukmasse ist es jedoch, anders als im Kunststoffbereich, bei dem die Schneckengänge der beiden Schnecken einander dicht kämmen, erforderlich, einen erheblichen Abstand zwischen den Schneckengängen der gegenüberliegenden Förderschnecken einzuhalten, um überhaupt einen Einzug des Mischklumpens in die Schneckengänge zu erreichen. Dadurch, dass die Schneckengänge einander nicht eng kämmen, wohl aber ineinander greifen, findet jedoch keine oder nur eine sehr geringe Selbstreinigung des DSE statt. Dies kann, bei der aufeinanderfolgenden Verarbeitung miteinander unverträglicher Rezepturen zu der Notwendigkeit einer Zwischenreinigung des Extruders führen. Diese unzureichende Selbstreinigung kann darüberhinaus zu einer verlängerten Verweilzeit des Mischgutes im Extruder führen. Falls im Extruder Fertigmischungen verarbeitet werden, kann dies problematisch sein, da Fertigmischungen regelmäßig in bestimmten Zeit- und/oder Temperaturgrenzen zu verarbeiten sind. Verweilen nun bestimmte Mischungspartikel zu lange in den "Totzonen" der Schneckengänge, so können die Mischungspartikel ggf. chemisch reagieren, z.B. vernetzen und in Form von Stippen etc. zu erheblichem Ausschuß führen. Es sind daher Ausfallzeiten und Personalaufwendungen durch häufige Reinigungsintervalle einzukalkulieren. Zudem ist es durch den relativ großen Abstand der Schnecken bzw. deren großes Flankenspiel nicht möglich, einen hinreichenden Druck aufzubauen, um die Masse durch eine Lochscheibe oder dergleichen formgestaltendes Element zu pressen. Daher muß zum Druckaufbau dem DSE ein sogenannter "Roller Die", nachgeschaltet werden, was zusätzlichen Aufwand bedeutet. Alternativ kann auch, ebenfalls unter zusätzlichem Aufwand, eine Zahnradpumpe mit einem Extrusionswerkzeug nachgeschaltet werden.

Der Erfindung liegt die Aufgabe zugrunde, die Effizienz der Verarbeitung von Kautschuk oder ähnlichen zähen Stoffen zu verbessern.

Die Erfindung löst diese Aufgabe durch eine Vorrichtung mit den Merkmalen des Anspruchs 1 Hinsichtlich vorteilhafter Ausgestaltungen der Erfindung wird auf die Ansprüche 2 bis 17 verwiesen.

In der erfindungsgemäßen Ausbildung nach Anspruch 1 ist erreicht, dass der Zwischenraum zwischen den Schneckengängen gegenüberliegender Schnecken in seiner Größe variiert. Dadurch können unterschiedliche Bereiche dieser Zwischenräume variierend von Bereichen der Schneckengänge überstrichen und somit durchkämmt werden. Die Selbstreinigung einer Vorrichtung mit zwei Schnecken oder ähnlichen Förderorganen, etwa auch solchen mit einzelnen, radial auswärts weisenden Schaufeln oder dergleichen, ist dadurch erheblich verbessert.

Ein nahezu vollständiges Durchschreiten eines Zwischenraums eines Förderorgans durch ein oder mehrere Förderglieder des zweiten Förderorgans ist möglich, wenn die Rotationsgeschwindigkeit des ersten Förderorgans mal schneller und mal langsamer als die des zweiten Förderorgans ist.

Eine hard- oder softwareseitig implementierte Steuerung ist besonders einfach, wenn ein Förderorgan seine Rotationsgeschwindigkeit beibehält und die Rotationsgeschwindigkeit der anderen um diesen Wert alternierend variiert.

Auch wenn die Schneckengänge, Schaufeln oder andere Förderglieder der nebeneinanderliegenden Schnecken oder dergleichen in der Projektion einander überlappen, ist eine Kollision der Förderglieder vermieden, wenn ein in axialer Richtung extremer Annäherungsabstand gleichzeitig ein Extremum in der Rotationsgeschwindigkeit der variierbar drehbaren Schnecke oder dergleichen bildet. Kurz vor der Kollision kann daher die Drehgeschwindigkeit gesteigert bzw. verringert und ein gegenüberliegender Extremabstand angesteuert werden. Die Geschwindigkeitsvariation kann als Zwischenprogramm zur Reinigung ohne durchlaufende Kautschukmasse und/oder während des laufenden Förderbetriebs stattfinden.

In der Ausbildung nach Anspruch 8 ist durch den Phasenversatz der drehbaren Förderorgane, also einen Vorlauf einer Schnecke oder dergleichen um einen Drehwinkel bezüglich der Rotationsachse ebenfalls ein gegenseitiges Säubern der Zwischenräume zwischen den Fördergliedern ermöglicht. Der Phasenversatz kann zur Vermeidung einer Kollision zwischen den Fördergliedern bei zum Beispiel gleichartigen Schnecken nur klein sein.

Von Vorteil ist, wenn den Einzelantrieben eine Steuer- bzw. Regelvorrichtung zur elektrischen bzw. elektronischen Kopplung der Schneckenantriebe zugeordnet ist. In Verbindung mit den Elektro-Einzelantrieben für die Schnecken kann durch die Regelvorrichtung eine Kopplung zwischen den Schnecken erreicht werden, die gewährleistet, dass es zu keinen Kollisionen der Förderglieder kommt. Selbst in Gefahrensituationen sorgt die Steuer- bzw. Regelvorrichtung dafür, dass es zu keinen Kollisionen kommt. Bei einem "Not-Aus" oder beim Ausfall der Steuerspannung, beim Ausfall der Lastspannung eines oder beider Antriebe wird durch die Steuer- bzw. Regelvorrichtung dafür gesorgt, dass die Schnecken geregelt auf eine Drehzahl Null heruntergefahren werden. Gleiches gilt bei Kabelbruch oder Fehlfunktionen von Messwertaufnehmern oder Absolutwertgebern bei Fehlfunktionen von Frequenzumrichtern, die die Drehzahl der Elektromotore bestimmen oder bei Fehlfunktionen von Gleichlaufreglern oder anderen Störkomponenten in der Vorrichtung zum Verarbeiten von Gummi- oder Gummirohmasse oder dergleichen.

Die Steuer- bzw. Regelvorrichtung kann aber auch vor Überlastung der Einzelantriebe schützen. Sie kann zum Beispiel automatisch eine Drehzahländerung herbeiführen, wenn die Lastgrenze eines Antriebs erreicht wird. Wird z. B. diese Schnecke langsamer bzw. die andere Schnecke automatisch schneller angetrieben, würde erreicht, dass die grade z. B. mehr Materialien in den Kanal einziehende und deswegen an der Lastgrenze arbeitende Schnecke automatisch von der Drehzahl in den möglichen Grenzen reduziert wird, so dass das Material durch den größer werdenden Kanal zwischen den Schnecken an die weniger belastete abfließen kann und umgekehrt. Durch diese Steuervorrichtung können damit die Lasten verteilt werden. Die einzelnen Antriebe können ggf. mit kleinerer Leistung installiert werden.

Eine Aufteilung in unterschiedliche Funktionsbereiche der Förderorgane kann bewirken, dass etwa nur im vorderen Bereich ein Druckaufbau stattfindet, während der übrige Bereich verschleißarm und schnell transportiert. Im Gegensatz zum übrigen Bereich des Extruders sind hier, zumindest in einem Teilbereich der Schnecken, die Schneckengänge so ausgeführt, dass sich ein kleines Flankenspiel ergibt. Dies kann entweder durch eine kleine Gangsteigung und/oder eine große Stegbreite erreicht werden. Bei der Förderung hochviskoser Massen können hierbei hohe Spaltkräfte entstehen, welche die Schnecken an den Zylinder drücken. Es ist daher vorteilhaft, diesen Bereich der Schnecken mit einem besonderen Schutz für einen Kontaktverschleiß, z.B. molybdänhaltige Aufpanzerungen der Schneckenstege, zu versehen. Auch der Zylinder oder zumindest dessen Innenwandung kann in diesem Bereich über einen besonderen Verschleißschutz verfügen.

Weisen die Schnecken im vorderen Bereich eine andere, z.B. eine höhere Anzahl von Schneckengängen auf als die Schnecken im hinteren Bereich, kann dadurch eine Aufteilung des Gesamtmassestroms in mehrere Teilströme erreicht werden, was die Kühlung vorteilhaft zu beeinflussen vermag.

Insbesondere kann der druckaufbauende vordere Bereich, der einem erhöhten Verschleiß ausgesetzt ist, einzeln auswechselbar sein. Hierzu ist der Zylinder in diesem Bereich getrennt ausgeführt und die Schneckenspitzen wechselbar konstruiert.

Eine Verdichtung mit verbundenem Druckaufbau im Endbereich der Förderung ergibt sich vorteilhaft vor allem dadurch, dass die Achsen der beiden Förderorgane über den Förderweg aufeinander zulaufen. Dann kann im Einfüllbereich zunächst eine Zerlegung des Klumpens und eine Förderung der entstehenden Masse stattfinden, wohingegen im Endbereich der Förderung ein so großer Druck aufgebaut wird, dass die Masse durch eine Form, etwa einen Strainer oder mehrere Schneidmesser, gepreßt wird.

Weitere Vorteile und Merkmale der Erfindung ergeben sich aus nachfolgend beschriebenen und zumindest teilweise in der Zeichnung dargestellten Ausführungsbeispielen des Gegenstandes der Erfindung.

In der Zeichnung zeigt:

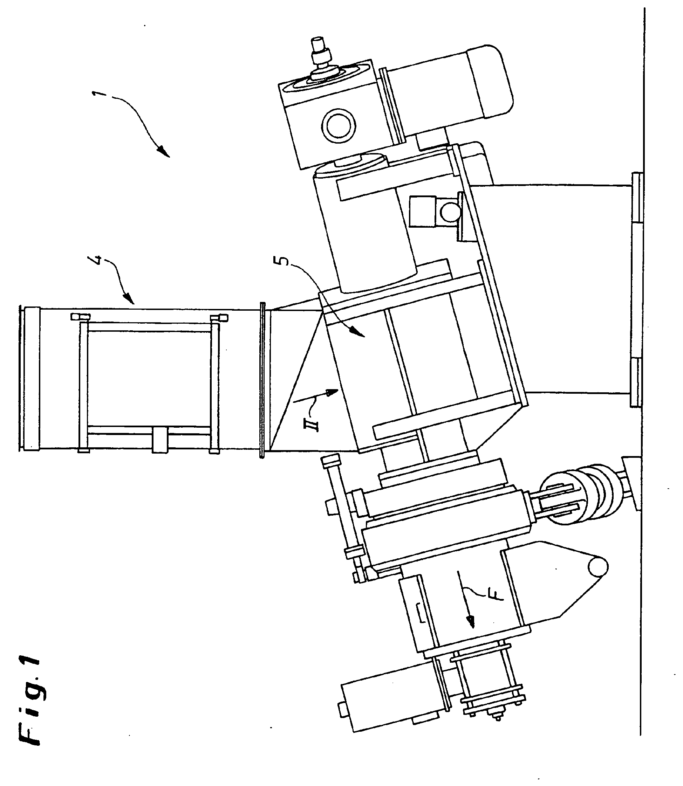

- Fig. 1: eine erfindungsgemäße Vorrichtung in Seitenansicht,

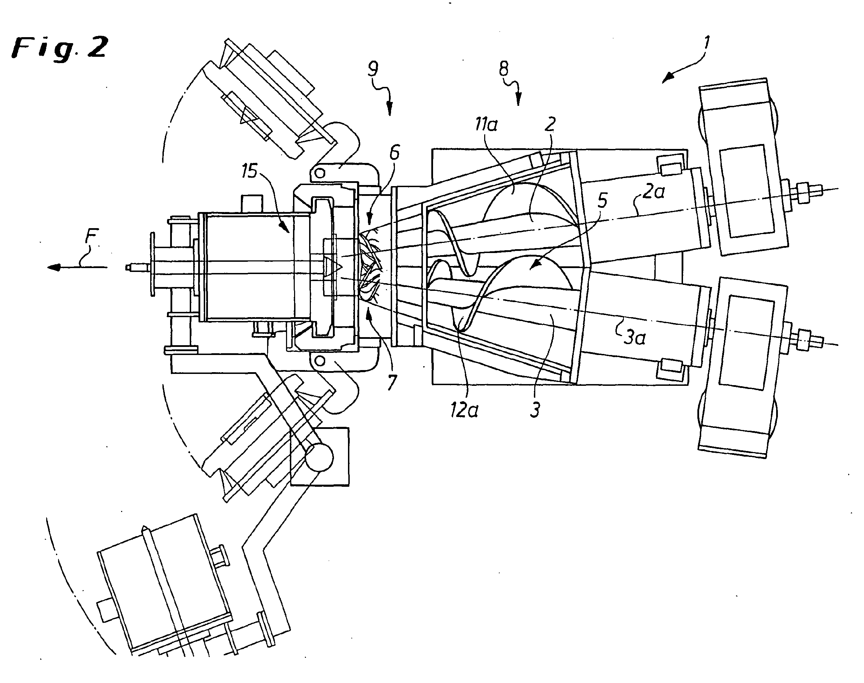

- Fig. 2: eine Ansicht aus Richtung des Pfeils II in Fig. 1,
- Fig. 3: eine Detailansicht der in Fig. 2 gezeigten Förderorgane in einer ihrer Einbaustellung entsprechenden Ausrichtung zueinander,
- Fig. 4: eine schematische Schnittansicht von Schneckengängen beider Schnecken in einer Momentaufnahme bei minimaler Rotationsgeschwindigkeit einer Schnecke, etwa entsprechend dem Ausschnitt IV in Fig. 3,
- Fig. 5: eine ähnliche Ansicht wie Fig. 4, jedoch in einer Momentaufnahme bei maximaler Rotations-geschwindigkeit einer Schnecke.

Die erfindungsgemäße Vorrichtung 1 bildet insgesamt einen Doppelschneckenextruder mit zwei Schnecken 2, 3 aus. Anstelle der Schnecken 2, 3 können auch ähnliche Förderorgane mit beispielsweise Schaufeln oder anderen, auch vereinzelten Fördergliedern in Betracht kommen. In der Zeichnung sind stets Schnecken 2, 3 dargestellt.

Die Vorrichtung 1 umfasst zur Materialzuführung einen Übergabeschacht 4, durch den ein zu verarbeitendes Rohmaterial, etwa Natur- oder Kunstkautschuk oder ein anderes Gummi- oder Gummirohmaterial, auch gemischt mit anderen Komponenten, zuführbar ist. Das eingefüllte Material kann etwa unmittelbar aus einem Mischer ohne Vorschaltung eines Walzwerks oder dergleichen stammen.

Der Übergabeschacht 4 mündet in den Arbeitsraum 5, in dem die beiden Schnecken 2, 3 der Vorrichtung 1 liegen. Deren Anordnung ist derart, dass ihre Achsen 2a und 3a in Förderrichtung F aufeinander zu laufen und sich in spitzem Winkel schneiden. Dadurch verengt sich der Arbeitsraum 5 in Förderrichtung F. Je weiter das Fördergut sich den Spitzen 6, 7 der Schnecken 2, 3 annähert, desto enger wird der Raum. Somit steigt der Druck auf das Fördergut durch die Schnecken 2, 3 in Förderrichtung F an.

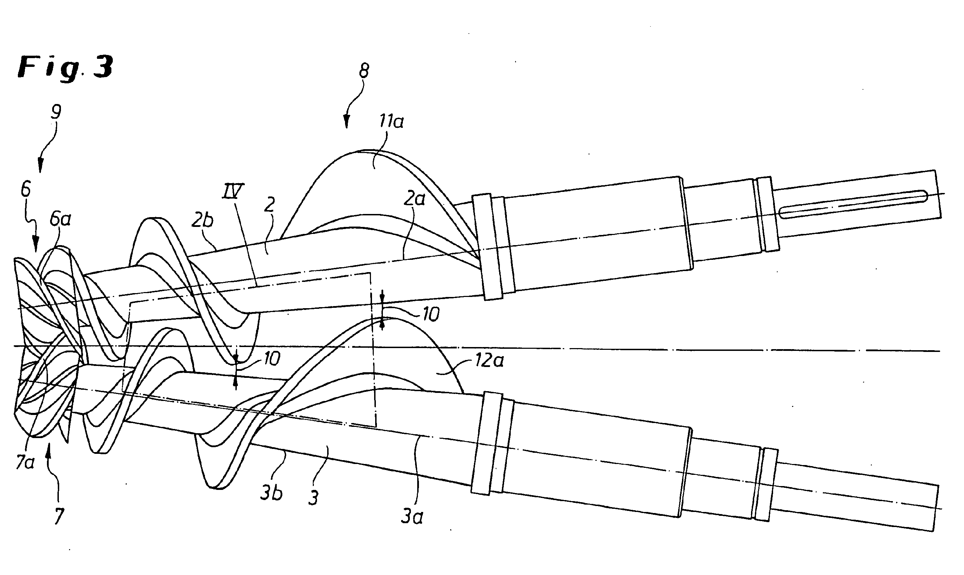

Die Schnecken 2, 3 sind über ihren axialen Verlauf nicht gleichartig ausgebildet, sondern weisen zumindest zwei unterschiedliche Funktionsbereiche 8, 9 auf, wobei der in Förderrichtung F hintere Bereich 8 einen für großen Durchsatz vorgesehenen Transportbereich und der in Förderrichtung F vordere Bereich der Spitzen 6, 7 einen Druckaufbaubereich 9 bildet. In diesem Bereich sind die Schneckengänge 6a, 7a steiler als im hinteren Bereich 8 (Fig. 3) und durchkämmen einander inniger, das heißt, dass die Schneckengänge 6a (7a) der ersten (zweiten) Schnecke 2 (3) bis fast zu dem Achskörper 3b (2b) der zweiten (ersten) Schnecke 3 (2) heranreichen. Eine andere vorteilhafte Gestaltung kann dadurch erreicht werden, dass die Spitzen 6, 7 im Druckaufbaubereich 9 ein kleineres Flankenspiel aufweisen, als die Schnecken im Transportbereich 8.

Im Transportbereich 8 hingegen ist der Querabstand 10 zwischen den Schneckengängen 11a (12a) der ersten (zweiten) Schnecke 2 (3) zu dem Achskörper 3b (2b) der zweiten (ersten) Schnecke 3 (2) erheblich größer, wodurch sich hier einfacherer ein größerer Materialdurchsatz ohne große Druckausübung auf das Material ergibt.

Da im Druckaufbaubereich 9 der Spitzen 6, 7 sich ein erheblich größerer Verschleiß ergibt als im Transportbereich 8, sind die Spitzen 6, 7 einzeln auswechselbar, ohne dass die gesamten Schnecken 2, 3 ausgetauscht werden müßten.

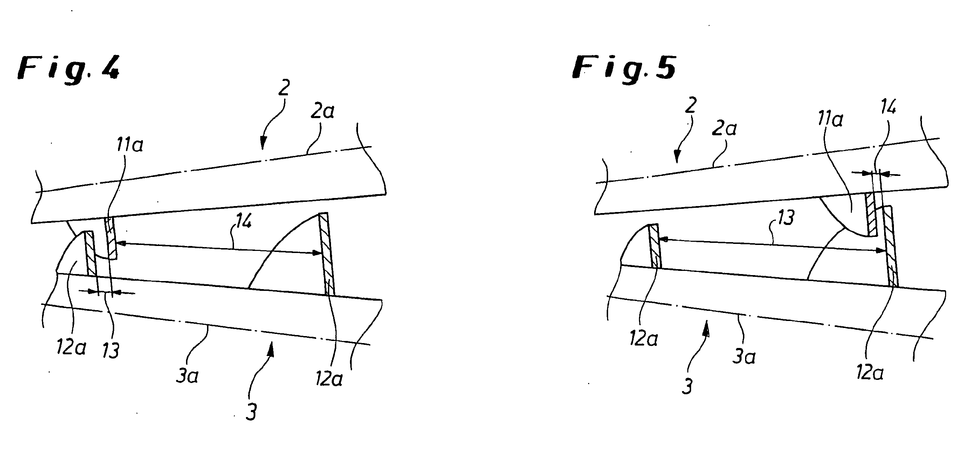

Zusätzlich oder alternativ kann (Fig. 4, Fig. 5) die Rotationsgeschwindigkeit der beiden Schnecken 2, 3 zueinander variieren. Dadurch kann eine verbesserte Selbstreinigung der Vorrichtung 1 erreicht und das Zusetzen insbesondere des Nahbereichs der Schneckengänge 6a, 7a, 11a, 12a durch deren axiale Annäherung verhindert werden. Es versteht sich, dass die Annäherung stets vor einer Kollision enden muß. Um dies sicherzustellen, wird beispielsweise die Rotationsgeschwindigkeit der Schnecke 3 konstant gehalten. Die Rotationsgeschwindigkeit der Schnecke 2 variiert alternierend um diesen Mittelwert. Dadurch kommt es bei niedrigster Rotationsgeschwindigkeit der Schnecke 2 zu der Annäherung mit Minimierung des axialen Abstands 13 der Schneckengänge 11a, 12a gemäß Figur 4. Hiervon ausgehend, steigt die Rotationsgeschwindigkeit der Schnecke 2 wieder an, durchläuft den Mittelwert nach Figur 3 und erreicht bei maximaler Rotationsgeschwindigkeit die gegenüberliegende Extremannäherung mit Maximierung des Abstands 13 und Minimierung des Abstands 14 nach Figur 5, von der aus die Rotationsgeschwindigkeit der Schnecke 2 wieder abnimmt. Die Rotationsgeschwindigkeit der Schnecke 2 ändert sich daher periodisch und kann eine Sinus- oder ähnliche Funktion über die Zeit beschreiben.

Sofern ein Druckaufbaubereich 9 mit besonders enger Verzahnung der Schneckengänge 6a, 7a vorhanden ist, wird an diesem das Maß der Geschwindigkeitsvariation zur Vermeidung von Kollisionen festzulegen sein.

Zusätzlich oder alternativ kann auch zur besseren Selbstreinigung eine der Schnecken 2, 3 um ihre Achse 2a, 3a ein Stück weit verdreht sein - nicht gezeichnet -, um so ebenfalls durch den Phasenversatz eine Änderung der axialen Abstände 13, 14 zwischen gegenüberliegenden Abschnitten der Schneckengänge 6a, 7a bzw. 11a und 12a und ein intensiveres Auskämmen der Zwischenräume zu erreichen.

Insgesamt kann die Vorrichtung 1 als Extruder dienen und hierfür an den Druckaufbaubereich anschließend unmittelbar und ohne Nachschaltung eines Walzwerks eine entsprechende Durchpreßeinrichtung 15 umfassen.

Ein manuelles Abschälen von Material kann vollständig vermieden werden.

### Bezugszeichenliste:

- 1: Vorrichtung,
- 2: Schnecke,
- 2a: Schneckenachse,
- 2b: Achskörper.
- 3: Schnecke,
- 3a: Schneckenachse,
- 3b: Achskörper,
- 4: Übergabeschacht,
- 5: Arbeitsraum,
- 6: Spitze der Schnecke 2,
- 6a: Schneckengang,
- 7: Spitze der Schnecke 3,
- 7a: Schneckengang,
- 8: Transportbereich,
- 9: Druckaufbaubereich,
- 10: Querabstand,
- 11a: Schneckengang,
- 12a: Schneckengang,
- 13: axialer Abstand,
- 14: axialer Abstand,
- 15: Durchpresseinrichtung

## Patentansprüche

1. Vorrichtung (1) zum Verarbeiten von Gummi- oder Gummirohstoffmasse oder dgl., insbesondere Natur- oder Kunstkautschukmasse, wobei die Masse zumindest bereichsweise zwischen zwei mit Einzelantrieben versehenen, miteinander kämmenden Schnecken (2; 3) oder dergleichen rotierbaren, lang erstreckten Förderorganen förderbar ist,
**dadurch gekennzeichnet,**
**dass** eines der Förderorgane (2; 3) eine zumindest zeitweise gegenüber der Rotationsgeschwindigkeit des zweiten Förderorgans (3; 2) abweichende Rotationsgeschwindigkeit aufweist.

2. Vorrichtung nach Anspruch 1,
**dadurch gekennzeichnet,**
**dass** die Rotationsgeschwindigkeit des ersten Förderorgans (2; 3) phasenweise größer und phasenweise kleiner ist als diejenige des zweiten Förderorgans (3; 2).

3. Vorrichtung nach Anspruch 2,
**dadurch gekennzeichnet,**
**dass** die Rotationsgeschwindigkeit des ersten Förderorgans (2; 3) um einen konstanten oder variierenden Mittelwert, der von der Rotationsgeschwindigkeit des zweiten Förderorgans (3; 2) gebildet ist, periodisch alternierend variiert.

4. Vorrichtung nach einem der Ansprüche 2 oder 3,
**dadurch gekennzeichnet,**
**dass** die Rotationsgeschwindigkeit des zweiten Förderorgans (3; 2) im Betrieb konstant ist.

5. Vorrichtung nach Anspruch 4,
**dadurch gekennzeichnet,**
**dass** die Rotationsgeschwindigkeit des ersten Förderorgans (2;3) über die Zeit eine Sinus- oder sinusähnliche Funktion beschreibt.

6. Vorrichtung nach einem der Ansprüche 1 bis 5,
**dadurch gekennzeichnet,**
**dass** die Schneckengänge (6a, 7a; 11a, 12a) oder sonstige Förderglieder der beiden Schnecken (2; 3) oder ähnlichen Förderorgane einander kämmen und ihr Flankenspiel (13; 14) entsprechend der variierenden Geschwindigkeit über die Zeit variiert.

7. Vorrichtung nach Anspruch 6,
**dadurch gekennzeichnet,**
**dass** bei punktuell maximaler axialer Annäherung gegenüberliegender Schneckengänge (6a, 7a; 11a, 12a) oder sonstiger Förderglieder eine Extremstelle der über die Zeit aufgetragenen Geschwindigkeit des ersten Förderorgans (2; 3) liegt.

8. Vorrichtung (1) nach einem der Ansprüche 1 bis 7,
**dadurch gekennzeichnet,**
**dass** die Förderorgane (2; 3) zueinander gleichartig ausgebildet sind und geringfügig phasenversetzt zueinander drehen.

9. Vorrichtung nach einem der Ansprüche 1 bis 8,
**dadurch gekennzeichnet,**
**dass** den Einzelantrieben eine Steuer- bzw. Regelvorrichtung zur elektrischen bzw. elektronischen Kopplung der Schneckenantriebe zugeordnet ist.

10. Vorrichtung (1) nach einem der Ansprüche 1 bis 9,
**dadurch gekennzeichnet,**
**dass** die Schnecken (2; 3) oder dergleichen Förderorgane über ihren axialen Verlauf zumindest zwei unterschiedliche Funktionsbereiche aufweisen, wobei ein in Förderrichtung (F) hinterer Bereich einen für großen Durchsatz vorgesehenen Transportbereich (8) und ein in Förderrichtung (F) vorderer Bereich einen Druckaufbaubereich (9) bildet.

11. Vorrichtung (1) nach Anspruch 10,
**dadurch gekennzeichnet,**
**dass** die gegenüberliegenden Schneckengänge (11a; 12a) oder sonstigen Förderglieder der beiden Schnecken (2; 3) in dem in Förderrichtung (F) hinteren Bereich (8) relativ große Abstände (10) quer zu den Achsen (2a; 3a) zueinander aufweisen.

12. Vorrichtung (1) nach einem der Ansprüche 10 oder 11,
**dadurch gekennzeichnet,**
**dass** die Schneckengänge (6a; 7a) oder sonstigen Förderglieder der beiden Förderorgane in dem in Förderrichtung (F) vorderen Bereich (9) relativ geringe Abstände quer zu den Achsen (2a; 3a) zueinander aufweisen.

13. Vorrichtung (1) nach einem der Ansprüche 10 bis 12,
**dadurch gekennzeichnet,**
**dass** die Schnecken (2; 3) in dem Druckaufbaubereich (9) zumindest Bereichsweise ein kleineres Flankenspiel als im Transportbereich (8) aufweisen.

14. Vorrichtung (1) nach einem der Ansprüche 10 bis 13,
**dadurch gekennzeichnet,**
**dass** die Schnecken (2; 3) im Druckaufbaubereich (9) mit einer gegenüber dem Transportbereich (8) unterschiedlichen Anzahl von Schneckengängen versehen sind.

15. Vorrichtung (1) nach einem der Ansprüche 10 bis 14,
**dadurch gekennzeichnet,**
**dass** die in Förderrichtung (F) vorderen Bereiche (6; 7) der Förderorgane (2, 3) auswechselbar sind. '

16. Vorrichtung (1) nach einem der Ansprüche 10 bis 14,
**dadurch gekennzeichnet,**
**dass** die Achsen (2a; 3a) der Förderorgane (2; 3) zueinander parallel angeordnet sind, oder in einem spitzen Winkel stehen und in Förderrichtung (F) aufeinander zulaufen.

17. Vorrichtung (1) nach einem der Ansprüche 1 bis 16,
**dadurch gekennzeichnet,**
**dass** diese ein Extruder ist.

## Claims

1. A device (1) for processing rubber or rubber raw materials or the like, in particular natural rubber materials or artificial rubber materials, wherein the raw material is conveyable at least in regions between two screws (2; 3) or the like provided with individual drive mechanisms and furthermore meshing with one another of a rotatable, longitudinally-extending conveying member,
**characterised in that**
one of the conveying members (2; 3) has a speed of rotation that differs at least from time to time from the rate of rotation of the second conveying member (3; 2).

2. The device as specified in claim 1,
**characterised in that**
the rate of rotation of the first conveying member (2; 3) is greater in phases and is less than in phases than the rate of rotation of the second conveying member (3; 2).

3. The device as specified in claim 2,
**characterised in that**
the rate of rotation of the first conveying member (2; 3) varies periodically alternatingly by a constant or varying average value that is formed by the rate of rotation of the second conveying member (3; 2).

4. The device as specified in claim 2 or claim 3,
**characterised in that**
the rate of rotation of the second conveying member (3; 2) is constant during operation.

5. The device as specified in claim 4,
**characterised in that**
the rate of rotation of the first conveying member (2; 3) follows the period of a sine or modified sine wave function.

6. The device as specified in any one of claims 1 to 5,
**characterised in that**
the screw channels (6a, 7a; 11a, 12a) or other conveying elements of both of the screws (2; 3) or similar conveying members mesh with one another and their flank clearance (13; 14) varies corresponding to the varying rate over time.

7. The device as specified in claim 6,
**characterised in that**
an extreme point which, with the rate of speed of the first conveying member (2; 3) plotted over time, lies at the selective maximum axial approach of opposing screw channels (6a, 7a; 1la, 12a) or other conveying elements.

8. The device (1) as specified in any one of the claims 1 to 7,
**characterised in that**
the conveying members (2; 3) are configured as similar to one another and rotate with a minimal phase difference with regard to one another.

9. The device as specified in any one of the claims 1 to 8,
**characterised in that**
the individual drive mechanism is associated with a control or regulation device for the electrical or electronic coupling of the screw drives.

10. The device (1) as specified in any one of the claims 1 to 9,
**characterised in that**
the screws (2; 3) or similar conveying members have at least two different functional regions extending along their axial regions, wherein in the rearward region of conveying direction (F), one forms a transport region (8) intended for large throughput and furthermore in the frontward region of conveying direction (F) one forms a pressure build-up region (9).

11. The device (1) as specified in claim 10,
**characterised in that**
the opposing screw channels (11a; 12a) or other opposing conveying elements of both of the screws (2; 3) have in the rearward region (8) of conveying direction (F) relatively large distances (10) transverse to the axes (2a; 3a) with regard to one another.

12. The device (1) as specified in claim 10 or claim 11,
**characterised in that**
the screw channels (6a; 7a) or other conveying elements of both of the conveying members have in the frontward region (9) of conveying direction (F) relatively minimal distances transverse to the axes (2a; 3a) with regard to one another.

13. The device (1) as specified in any one of claims 10 to 12,
**characterised in that**
the screws (2; 3) in the pressure build-up region (9) have in at least regions a smaller flank clearance than in the transport region (8).

14. The device (1) as specified in any one of claims 10 to 13,
**characterised in that**
the screws (2; 3) in the pressure build-up region (9) are provided with a number of screw gears that is different from that in the transport region (8).

15. The device (1) as specified in any one of claims 10 to 14,
**characterised in that**
the frontward regions (6; 7) of the conveying members (2, 3) in the conveying direction (F) are interchangeable.

16. The device (1) as specified in any one of claims 10 to 14,
**characterised in that**
the axes (2a; 3a) of the conveying members (2; 3) are arranged parallel to one another or alternatively are arranged in an acute angle and converge on one another in the conveying direction (F).

17. The device (1) as specified in any one of claims 1 to 16,
**characterised in that**
it is an extruder.

## Revendications

1. Dispositif (1) de mise en oeuvre d'une masse de caoutchouc ou de matière première de caoutchouc ou similaire, notamment d'une masse de caoutchouc naturel ou synthétique, la masse étant transportable au moins par zones entre deux vis sans fin (2; 3) s'engrènant l'une dans l'autre, munies d'entraînements individuels ou organes de transport similaires, allongés, rotatifs
**caractérisé en ce que**
l'un des organes de transport (2; 3) présente une vitesse de rotation différente au moins par moments de la vitesse de rotation du deuxième organe de transport (3; 2).

2. Dispositif selon la revendication 1,
**caractérisé en ce que**
la vitesse de rotation du premier organe de transport (2; 3) est supérieure par phases et inférieure par phases à celle du deuxième organe de transport (3; 2).

3. Dispositif selon la revendication 2,
**caractérisé en ce que**
la vitesse de rotation du premier organe de transport (2; 3) varie alternativement et par périodes d'une valeur moyenne constante ou variable qui est formée par la vitesse de rotation du deuxième organe de transport (3; 2) .

4. Dispositif selon l'une quelconque des revendications 2 ou 3,
**caractérisé en ce que**
la vitesse de rotation du deuxième organe de transport (3; 2) est constante en cours de fonctionnement.

5. Dispositif selon la revendication 4,
**caractérisé en ce que**
la vitesse de rotation du premier organe de transport (2; 3) décrit dans le temps une fonction sinusoïdale ou sinusoïdale modifiée.

6. Dispositif selon l'une quelconque des revendications 1 à 5,
**caractérisé en ce que**
les pas de la vis sans fin (6a, 7a ; 11a, 12a) ou autres éléments de transport des deux vis sans fin (2; 3) ou organes de transports analogues s'engrènent et le jeu de leur filet (13; 14) varie dans le temps, en correspondance avec la vitesse variable.

7. Dispositif selon la revendication 6,
**caractérisé en ce que**
lors d'une approche axiale ponctuelle maximale de pas de vis opposés (6a, 7a ; 11a, 12a) ou d'autres éléments de transport, on se trouve dans une position extrême de la vitesse appliquée dans le temps du premier organe de transport (2; 3).

8. Dispositif selon l'une quelconque des revendications 1 à 7,
**caractérisé en ce que**
les organes de transport (2; 3) sont conçus de façon identique les uns aux autres et tournent avec un léger décalage de phase les uns par rapport aux autres.

9. Dispositif selon l'une quelconque des revendications 1 à 8,
**caractérisé en ce que**
un dispositif de commande ou de réglage pour l'accouplement électrique ou électronique des entraînements de vis sans fin est associé aux entraînements individuels.

10. Dispositif selon l'une quelconque des revendications 1 à 9,
**caractérisé en ce que**
les vis sans fin (2; 3) ou organes de transport similaires présentent sur leur tracé axial aux moins deux zones fonctionnelles différentes, une zone arrière en direction de transport (F) formant une zone de transport (8) prévue pour un gros débit et une zone avant en direction de transport (F) formant une zone d'établissement d'une pression (9).

11. Dispositif selon la revendication 10,
**caractérisé en ce que**
les pas de vis opposés (11a ; 12a) ou autres éléments de transport des deux vis sans fin (2; 3) présentent dans la zone arrière (8) en direction de transport (F) des écarts (10) mutuels relativement importants, à la transversale des axes (2a; 3a).

12. Dispositif selon l'une quelconque des revendications 10 ou 11,
**caractérisé en ce que**
les pas de vis (6a; 7a) ou autres éléments de transport des deux organes de transport présentent dans la zone avant (9) en direction de transport (F) des écarts mutuels relativement faibles, à la transversale des axes (2a; 3a) .

13. Dispositif selon l'une quelconque des revendications 10 à 12,
**caractérisé en ce que**
les vis sans fin (2; 3) présentent au moins par zones dans la zone d'établissement d'une pression (9) un jeu de filet moins important que dans la zone de transport (8).

14. Dispositif selon l'une quelconque des revendications 10 à 13,
**caractérisé en ce que**
dans la zone d'établissement d'une pression (9), les vis sans fin (2; 3) sont munies d'un nombre de pas de vis qui est différent de celui de la zone de transport (8).

15. Dispositif selon l'une quelconque des revendications 10 à 14,
**caractérisé en ce que**
les zones avant (6; 7) en direction de transport (F) des organes de transport (2, 3) sont interchangeables.

16. Dispositif selon l'une quelconque des revendications 10 à 14,
**caractérisé en ce que**
les axes (2a; 3a) des organes de transport (2; 3) sont disposés à la parallèle ou à angle aigu les uns des autres et se rejoignent en direction de transport (F).

17. Dispositif selon l'une quelconque des revendications 1 à 16,
**caractérisé en ce qu'**
il s'agit d'une extrudeuse.
